# EUROPÄISCHE PATENTSCHRIFT

(11) **EP 1 479 923 B1**
(45) Veröffentlichungstag und Bekanntmachung des Hinweises auf die Patenterteilung: **20.12.2006**
(21) Anmeldenummer: 03405367.8
(22) Anmeldetag: 23.05.2003
(51) Int. Cl.: F16B 12/14

(54) **Verbindungselement zum Verbinden von vorzugsweise quer zueinander angeordneten plattenförmigen Elementen und Bauteil enthaltend wenigstens ein Verbindungselement**
Connecting element for connecting preferably plate shaped elements arranged transversely to one another, and structure containing at least one connecting element
Elément de fixation pour connecter de préférence des éléments en forme de plaques arrangés transversalement l'un par rapport à l'autre, et structure comprenant au moins un élément de fixation

(43) Veröffentlichungstag der Anmeldung: 24.11.2004
(73) Patentinhaber: Zwissler, Ruedi Gestalter SWB, 9008 St. Gallen (CH)
(72) Erfinder: Zwissler, Ruedi, 9088 St. Gallen (CH)
(74) Vertreter: Wenger, René

(56) Entgegenhaltungen:
- FR-A- 2 439 321
- GB-A- 1 118 379
- US-A1- 2003 063 950

## Beschreibung

Die Erfindung betrifft ein Verbindungselement zum Verbinden plattenförmiger Elemente, wie es beispielsweise im Möbelbereich zum Einsatz kommt, sowie ein Bauteil aus plattenförmigen Elementen enthaltend das erfindungsgemässe Verbindungselement.

Zur Verbindung von zwei plattenförmigen Elementen sind in der Vergangenheit eine Reihe verschiedener Systeme entwickelt worden. Die Systeme basieren beispielsweise entweder auf einer reinen Dübelverbindung oder aus einer Schraub-Klemm-Kombination und weisen daher gewisse Nachteile auf. Eine Demontage dieser Verbindung ist teilweise entweder nicht oder nur erschwert möglich. Meist ist bei einer erneuten Verbindung dieser Elemente die Stabilität der Verbindung beeinträchtigt und es treten Probleme mit der Masshaltigkeit auf. Ein Auftreten einer Massveränderung kann andererseits auch alleine durch eine längere Standzeit und eine Veränderung des verwendeten Materials, wie sie beispielsweise bei Holz stattfinden, erfolgen. Weiterhin erfordern die verschiedenen Systeme eine unterschiedliche Bearbeitung der einzelnen plattenförmigen Elemente, d.h. die Öffnungen oder Bohrungen zur Aufnahme von Schrauben, Dübeln, Spannelementen etc. in den einzelnen Elementen sind teilweise unterschiedlich ausgebildet und erfordern daher mehrere Produktionsschritte. Somit sind die plattenförmigen Elemente zwangsläufig nicht beliebig miteinander austauschbar. Neben diesen herstellungstechnischen Aspekten treten insbesondere bei Möbeln im Wohnbereich auch ästhetische Gesichtspunkten in den Vordergrund, meist dann, wenn diese Möbel in einer anderen Konstellation neu zusammengebaut werden sollen. Nicht mehr genutzte Öffnungen, z.B. Schraubenlöcher ergeben meist eine unebene und wenig ansehnliche Oberfläche.

EP 0 131 149 beschreibt beispielsweise eine Eckverbindung zur Verbindung von Möbelteilen. Zwei Gewindestopfen in Kombination mit einem Gewindestab ermöglichen ein Zusammenfügen der Elemente. Hierzu sind allerdings in den Elementen definierte und unterschiedliche Öffnungen bzw. Bohrungen erforderlich. Ein anderer Weg zum Zusammensetzen der Elemente ist nicht möglich.

Die GB 1,118,379 beschreibt eine Verbindungsanordnung mit einem Schraubenbolzen zum Verbinden zweier Möbelteile. Dabei ist auf einer Seite des Schraubenbolzens eine Gewindemuffe aufschraubbar, die ihrerseits in eine entsprechende Aussparung unverlierbar in einem Möbelteil einsetzbar ist. Auf der anderen Seite des Schraubenbolzens ist zur Verbindung mit dem anderen Möbelteil eine Mutter vorgesehen, die in einer Hülse gelagert ist. Dabei ist diese Hülse ihrerseits in einer kreiszylindrischen Aussparung des Möbelteils eingesetzt.

Es ist die Aufgabe der vorliegenden Erfindung, die Nachteile des Bekannten zu vermeiden und ein alternatives Verbindungselement zum Verbinden von vorzugsweise quer zueinander angeordneten, plattenförmigen Elementen bereitzustellen, bei dem aufgrund der Ausführung der Bestandteile des Verbindungselementes eine weitgehend freizügige Anordnung der plattenförmigen Elemente ermöglicht, ein vereinheitlichtes Bearbeiten der zu verbindenden Platten möglich ist oder das Verbindungselement ein nachträgliches Festziehen der Verbindung erlaubt.

Die Aufgabe wird gelöst durch ein Verbindungselement mit den Merkmalen gemäss Anspruch 1.

Das erfindungsgemässe Verbindungselement zum Verbinden von vorzugsweise quer zueinander angeordneten, plattenförmigen Elementen wird gekennzeichnet durch ein erstes Halteelement mit einem Haltekopf und mit einem Schaft, der eine quer zu seiner Längsmittelachse verlaufende Gewindebohrung aufweist. Das Verbindungselement wird weiter gekennzeichnet durch ein zweites Halteelement mit einem Haltekopf und mit einem Schaft, der eine in seiner Längsmittelachse verlaufende Gewindebohrung aufweist, durch einen Schraubenbolzen, welcher mit den beiden Halteelementen verschraubbar ist und durch eine Schraubenmutter, welche zwischen den beiden Halteelementen auf den Schraubenbolzen aufschraubbar ist. Die Halteelemente sind weiterhin in korrespondierenden Ausnehmungen in den plattenförmigen Elementen einsetzbar und durch den Schraubenbolzen verbindbar. Das Verbindungselement ist weiter dadurch gekennzeichnet, dass das erste Halteelement mittels der Schraubenmutter in seiner Ausnehmung verspannbar ist, bevor das zweite Halteelement auf den Schraubenbolzen aufschraubbar ist.

Gemäss der Erfindung übernimmt der Schraubenbolzen die Funktion des Bindegliedes zwischen dem ersten Halteelement und dem zweiten Halteelement. Die Halteelemente werden jeweils in durchgängigen Bohrungen bzw. die Ausnehmungen in den plattenförmigen Elementen eingebracht. Neben den Ausnehmungen und den durchgängigen Bohrungen, die jeweils senkrecht zur Plattenebene des Elements angeordnet sind, weist das Element noch eine weitere, nicht durchgängige Bohrung auf, welche parallel zur Plattenebene angeordnet ist und die durchgängige Bohrung durchstösst. Die nicht durchgängige Bohrung nimmt hierbei den Schraubenbolzen auf. Aufgrund des Einsatzes des Schraubenbolzens wird eine wiederholt lösbare Verbindung zwischen den plattenförmigen Elementen geschaffen. Dies erlaubt auch eine einfache Anpassung, insbesondere wenn eine neue Zusammenstellungen aufgrund geänderter Anforderungen für die Anordnung der plattenförmigen Elemente notwendig ist.

Das erste Halteelement wird durch den Schraubenbolzen, der in die senkrecht zur Längsmittelachse angeordnete Gewindebohrung des Schaftes greift, im plattenförmigen Element gehalten. Das Halteelement bzw. der Schraubenbolzen besitzen allerdings in dieser Anordnung weiterhin eine gewisse Bewegungsfreiheit innerhalb des Elementes.

Die Schraubenmutter, welche eine zentrale Gewindebohrung aufweist, befindet sich nach dem Aufschrauben auf den Schraubenbolzen auf der Stirnseite des ersten plattenförmigen Elementes. Die Stirnseite befindet sich in unmittelbarer Nähe der für die Verbindung genutzten Ausnehmungen bzw. der durchgängigen Bohrung des ersten plattenförmigen Elements. Mit dem Aufschrauben der Schraubenmutter wird der Schraubenbolzen sowie das erste Halteelement im ersten plattenförmigen Element im wesentlichen spielfrei fixiert. Aufgrund des Gewindes kann im Falle einer Lockerung dieses Verbundes, beispielsweise aufgrund einem Nachgeben des Materials des plattenförmigen Elements wie es z.B. bei Holz durchaus der Fall sein kann, die Schraubenmutter nachgezogen und eine erneute feste Fixierung des Verbundes hergestellt werden.

Als plattenförmige Elemente sind im Rahmen der Erfindung flächige Materialstücke zu verstehen, die unter Nutzung des erfindungsgemässen Verbindungselements positioniert und verbunden werden können. Es lassen sich so beispielsweise unterschiedlichste Möbelstücke wie Tische, Stühle, Regale, Paravents oder Schränke auf Basis normierter Elemente und auch entsprechend den Kundenwünschen herstellen. Die Elemente können aus verschiedenen Materialien wie z.B. Holz, Metall, Kunststoff, anderen, geeigneten Materialien oder Kompositen bestehen. Vorstellbar ist auch eine Mischbauweise der Möbelstücke aus Elementen mit unterschiedlichen Materialien. Aufgrund des erfindungsgemässen Verbindungselements ist es möglich, einheitliche Bohrungen, d.h. die durchgängigen sowie die nicht-durchgängigen Bohrungen für alle Elemente vorzusehen. Die Herstellung der plattenförmigen Element kann rationeller und kostengünstiger erfolgen, da weniger Werkzeuge und Verfahrensschritte erforderlich sind. Gleichzeitig kann die Anzahl an unterschiedlichen, plattenförmigen Elementen, die zum Aufbau verschiedener Kombinationen notwendig ist, durch die freizügigere Verbindbarkeit der Elemente deutlich reduziert werden. Dies bedeutet wiederum einen erheblich geringeren Lagerhaltungsaufwand und weniger Kapitalbedarf.

Das zweite Halteelement wird nach dem Ansetzen des zweiten plattenförmigen Elements an den oben beschriebenen Verbund aus erstem Halteelement, Schraubenbolzen und Schraubenmutter auf den Schraubenbolzen aufgeschraubt. Das zweite Halteelement enthält daher in seinem Schaft eine Gewindebohrung, deren Gewindegang in der Längsmittelachse des Schaftes verläuft. Beim Ansetzen des zweiten plattenförmigen Elements wird der überstehende Schraubenbolzen durch die durchgängige Bohrung geführt. Die Schraubenmutter wird dabei durch eine Ausnehmung aufgenommen, so dass die beiden plattenförmigen Elemente an der Verbindungsstelle im wesentlichen formschlüssig aneinander anliegen.

Grundsätzlich können die Bestandteile des Verbindungselements ähnlich wie die plattenförmigen Elemente aus unterschiedlichen Materialien hergestellt werden. Unter Berücksichtigung der erforderlichen Stabilität und der eingesetzten plattenförmigen Elemente können die Bestandteile aus Stahl, Leichtmetall, Kunststoff oder anderen geeigneten und dem Fachmann bekannten Materialien bestehen.

In einer bevorzugten Form weist der Schraubenbolzen an einem Ende einen Werkzeugansatz zur drehfesten Ansetzung eines Schraubwerkzeuges auf. Die Ausnehmung lässt sich in verschiedenen Formen gestalten. Dies kann z.B. in Schlitz- oder Kreuz-Form, in regelmässiger oder unregelmässiger polygonaler Form erfolgen. Dem Fachmann sind hier eine Reihe verschiedener Formen bekannt. Vorzugsweise ist die Ausnehmung als ein Innensechskant oder Innenvierkant ausgebildet. Der Werkzeugansatz ermöglicht unter Zuhilfenahme dieses Schraubwerkzeuges ein einfaches und kraftsparendes Eindrehen des Schraubenbolzens in die Gewindebohrung des ersten Halteelementes. Ebenfalls vorteilhaft ist der Schraubenbolzen ausgebildet, wenn das dem Werkzeugansatz gegenüberliegende Ende sich verjüngt. Dadurch wird ein Einführen und Eindrehen des Schraubenbolzens in die Gewindebohrung des ersten Halteelementes erleichtert.

Vorteilhaft weisen auch das zweite Halteelement und/oder die Schraubenmutter Werkzeugansätze zur drehfesten Ansetzung eines Werkzeuges, vorzugsweise eines Schraubwerkzeuges auf. Der Einsatz eines Schraubwerkzeuges ermöglicht dem Anwender eine einfachere und sichere Handhabung der Schraubenmutter bzw. des zweiten Halteelements und erlaubt im weiteren das Festdrehen dieser Bestandteile mit der erforderlichen Kraftwirkung. Der Werkzeugansatz kann beispielsweise als Bohrung mit einem frei wählbaren Querschnitt ausgeführt sein. Vorzugsweise sind jeweils zwei Werkzeugansätze in Form von zylindrischen Bohrungen vorgesehen. Die Ansatzbohrungen befinden sich im Haltekopf des zweiten Halteelementes bzw. in der Schraubenmutter und weisen eine gewisse räumliche Distanz zur zentralen Gewindebohrung auf, d.h. sie sind parallel zur Längsmittelsachse versetzt angeordnet.

In einer weiteren Ausführungsform des Verbindungselementes weisen das erste und das zweite Halteelement jeweils einen Haltekopf auf, wobei dieser einen grösseren Durchmesser als der Schaft des jeweiligen Halteelementes besitzt. Die Halteköpfe der beiden Halteelemente sowie die Schraubenmutter besitzen vorzugsweise einen gleichmässigen, zylindrischen Aussenmantel. Vorstellbar ist auch ein sich konisch erweitender Aussenmantel, wobei die Erweiterung des Konus in einer Richtung weg vom Schaft des Halteelementes erfolgt. Auch ist eine Kombination zwischen einem zylindrischen und konisch verlaufenden Haltekopf denkbar. Die Halteköpfe der Halteelemente erlauben einerseits eine vereinfachte manuelle Handhabung beim Zusammenfügen der Verbindung, andererseits kann in die Halteköpfe auch die beschriebene Werkzeugansatz-Bohrung zur Ansetzung des Schraubwerkzeugs eingearbeitet werden, ohne eine Schwächung des Materials hervorzurufen.

Grundsätzlich sind alle denkbaren geometrischen Formen für die Halteköpfe möglich, allerdings sind rotationssymmetrische Formen vorteilhaft, da sich die Halteköpfe wie auch die Schäfte der Halteelemente bzw. die Schraubenmutter so formschlüssig in die entsprechenden Ausnehmungen der plattenförmigen Elemente versenken lassen. Bei nicht rotationssymmetrischen Formen, insbesondere der Schraubenmutter sowie dem Haltekopf des zweiten Halteelementes ist ein Aufschrauben und Positionieren nicht möglich, sofern die Ausnehmungen bzw. die durchgängigen Bohrungen nicht entsprechend grösser ausgeführt werden. Damit ist entweder eine freie Austauschbarkeit der Halteelemente oder der optische Aspekt, d.h. ein formschlüssiges Einbetten des Verbindungselementes in die plattenförmigen Elemente nicht gewährleistet.

Vorteilhafterweise besitzen die Halteköpfe der Halteelemente sowie die Schraubenmutter identische Abmessungen, d.h. identische Durchmesser und Stärken. Somit können die sie aufnehmenden Ausnehmungen ebenfalls identisch ausgeführt werden, was die Herstellung und eine beliebige Austauschbarkeit vereinfacht und Kosten reduziert. Zudem ist keine Vorab-Festlegung der einzelnen Ausnehmungen bzw. Bohrungen für die Aufnahme spezifischer Halteelemente, Schraubenmutter oder Schraubenbolzen notwendig. Die plattenförmige Elemente sind daher in gewissem Rahmen frei verbindbar. Weiter vorteilhaft sind die Halteelemente sowie die Schraubenmutter derart auf die Masse der Bohrungen abgestimmt, dass eine, hinsichtlich der Oberfläche des plattenförmigen Elements flächenbündige Anordnungen des Verbindungselements in den Bohrungen bzw. der Ausnehmung erfolgt.

In einer Abwandlung des erfindungsgemässen Verbindungselements weist das zweite Haltelement eine geänderte Form auf und wird nicht zur Befestigung eines plattenförmigen Elements herangezogen, sondern wird als Fuss, insbesondere als Möbelfuss ausgebildet. Hierzu besitzt das als Fuss ausgebildete Halteelement bzw. der Haltekopf einen grösseren Durchmesser als die entsprechende Schraubenmutter und besitzt eine grössere Höhe. Aufgrund einer Ausnehmung rund um den Schaft des zweiten Halteelements ist der Fuss in der Lage, auch die Schraubenmutter, welche im Zusammenwirken mit dem Schraubenbolzen die Fixierung des ersten Halteelements erreicht, im wesentlichen vollständig zu umschliessen. Ebenfalls vorstellbar ist ein Halteelement, welches neben seiner Eigenschaft als Bestandteil des Verbindungselements eine weitere Funktion aufweist. Beispielsweise kann es als ein Scharnier für die Befestigung einer Türe oder als eine Positionierhilfe für einen Stapel von entsprechenden Bauteilen ausgebildet sein. Die vorhandenen Bohrungen der plattenförmigen Elemente lassen sich so vorteilhaft für eine weitere Nutzung einsetzen. Damit sind keine zusätzlichen Bohrungen für Türen, Positionierhilfen etc. notwendig.

Das erfindungsgemässe Verbindungselement ist weiter vorteilhaft durch ein Komplementärelement ausgestaltet. Das Komplementärelement weist einen Schaft auf, welcher mit einer quer zur Längsmittelachse ausgerichteten Bohrung versehen ist. Das Komplementärelement besitzt ebenso wie das erste Halteelement einen Haltekopf. Vorzugweise weist das Komplementärelement mit Ausnahme des Schaftes identische Masse wie das erste Halteelement auf. Der Schaft des Komplementärelements ist hingegen komplementär zum Schaft des ersten Halteelements ausgebildet. Beide Schäfte berühren sich im zusammengesetzten Zustand an der Anlagefläche. Im zusammengesetzten Zustand sind die Bohrungen in den jeweiligen Schäften der beiden Bestandteile des Verbindungselements deckungsgleich angeordnet. Die Durchgangsbohrung des Schaftes des Komplementärelements ist vorzugsweise ohne Gewindebohrung ausgeführt. Mit diesem Komplementärelement lässt sich eine vollständige Ausfüllung der durchgängigen Bohrung sowie der benachbarten Ausnehmungen erzielen. Der Schaft des ersten Halteelementes ist also in einer Ebene parallel und ausserhalb der Längsmittelachse des Schaftes unterbrochen ausgeführt, d.h. vom ursprünglich zylinderförmig ausgeführten Schaft ist ein Teil, vorzugsweise weniger als die Hälfte, des Material-Durchmessers entfernt Die Anlagefläche entspricht einem Längsschnitt durch diesen ursprünglichen zylindrischen Schaft, wobei der Längsschnitt wie ausgeführt abweichend von der Längsmittelachse des Schaftes liegt. Optional kann die Anlagefläche eine Oberflächenstrukturierung wie beispielsweise Rippen aufweisen. Diese Oberflächenstrukturierung bewirkt eine Festlegung der relativen Orientierung von erstem Halteelement und Komplementärelements und verhindert z.B. ein Verkanten dieser Bestandteile des Verbindungselements.

Neben dem rein optischen Effekt auf die Ausnehmungen erhöht das Zusammenwirken des ersten Halteelements mit dem Komplementärelement die Stabilität der Verbindung. Eine einseitige oder punktförmige Belastung des plattenförmigen Elements im Bereich der Ausnehmungen bzw. der durchgängigen Bohrung kann weitgehend vermieden werden. Entstehende Kräfte werden vom Schraubenbolzen quer zu dessen Längsachse auf das erste Halteelement bzw. das Komplementärelement übertragen und können über eine grössere Umfangsfläche auf das plattenförmige Element wirken.

Das Komplementärelement wird beim Zusammensetzen des Verbindungselements gleichzeitig mit dem ersten Halteelement, allerdings von der gegenüber liegenden Oberfläche des plattenförmigen Elements in die Ausnehmungen bzw. die durchgängige Bohrung platziert. Die komplementär zueinander ausgeführten Schäfte ergeben zusammen somit einem im wesentlichen zylindrischen Körper. Der Schraubenbolzen wird in die Gewindebohrung des ersten Halteelements eingeschraubt und fixiert das erste Halteelement und das Komplementärelement in den Ausnehmungen bzw. der durchgängigen Bohrung.

Zur detailierten Erläuterung des erfindungsgemässen Verbindungselements dienen die folgenden Figuren. Es zeigen die Figuren:
- Figur 1:: ein teilweise im Schnitt dargestelltes Bauteil bestehend aus drei plattenförmigen Elementen, die mit Verbindungselementen verbunden sind;
- Figur 2:: ein erstes Halteelement in Perspektive und im Querschnitt;
- Figur 3:: ein zweites Halteelement in Perspektive und im Querschnitt;
- Figur 4:: eine Schraubenmutter in Perspektive und im Querschnitt;
- Figur 5:: ein Komplementärelement in Perspektive und im Querschnitt;
- Figur 6:: ein Querschnitt durch einen Schraubenbolzens; und
- Figuren 7 a-e:: eine schematische Darstellung der einzelnen Schritte beim Verbinden plattenförmiger Elemente.

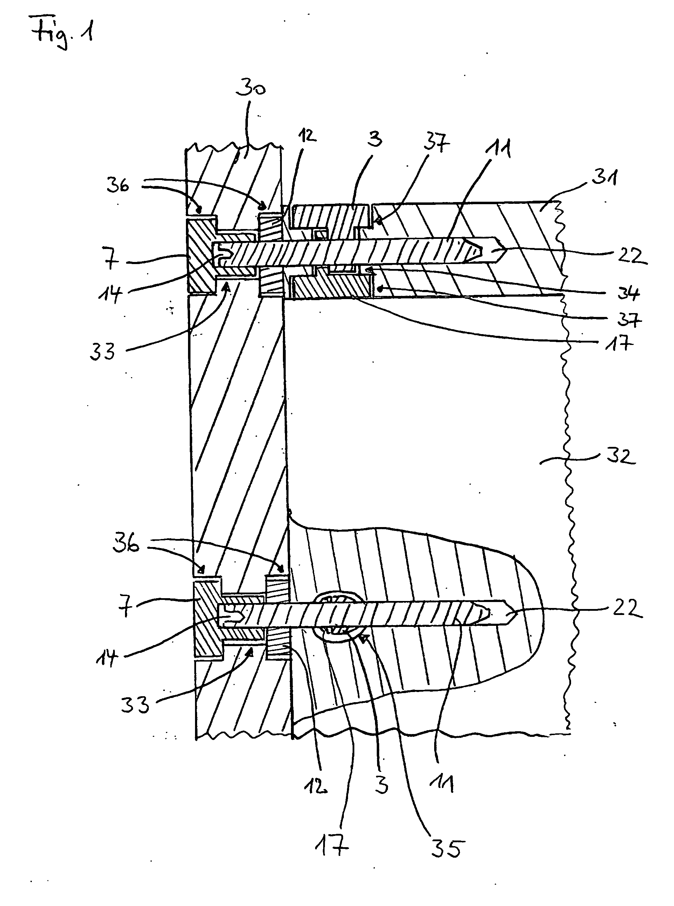

Das prinzipielle Zusammenwirken des erfindungsgemässen Verbindungselements 1 zeigt Figur 1. Das plattenförmige Holzelelement 30 enthält zwei Bohrungen 33, welche den Schaft 9 des zweiten Halteelements 7 aufnehmen. In der Figur ist das Holzelement 30 mit zwei weiteren Holzelementen 31 und 32 mittels verbindungselemente 1 verbunden. Während die Verbindung zwischen dem Holzelement 30 und 31 die Halteelemente 3 und 7, die Schraubenmutter 12, den Schraubenbolzen 11 und das Komplementärelement 17 im Längsschnitt zeigt, sind in der Verbindung zwischen den Holzelementen 30 und 32 das erste Halteelement 3 und das Komplementärelement 17 im Querschnitt, insbesondere im Bereich der durchgehenden Bohrung 35 gezeigt. Die Senkbohrungen 36, 37 und 38 sowie die durchgängigen Bohrungen 33, 34 und 35 in den plattenförmigen Elementen bilden jeweils zusammen die Ausnehmungen 13.
Das erste Halteelement 3 und das Komplementärelement 17 werden durch den Schraubenbolzen 11 in der Bohrung 34 gehalten. Der Schraubenbolzen 11 ist in der nicht durchgängigen Bohrung 22 angeordnet und weist ein Werkzeugansatz 14 auf. Die Schraubenmutter 12 fixiert zusammen mit dem Schraubenbolzen 11 das erste Halteelement 3 und das Komplementärteil 17 im Holzelement 31. Das angesetzte Holzelement 30 wird durch das zweite Halteelement 7 fest mit dem Holzelement 31 verbunden. In analoger Weise wirkt auch die Verbindung zwischen den Holzelementen 30 und 32. Das Holzelement 32 ist in Figur 1 allerdings nur ausschnittsweise und zwar im Bereich der Durchgangsbohrung 35 sowie der nicht durchgängigen Bohrung 38 im Schnitt gezeigt.

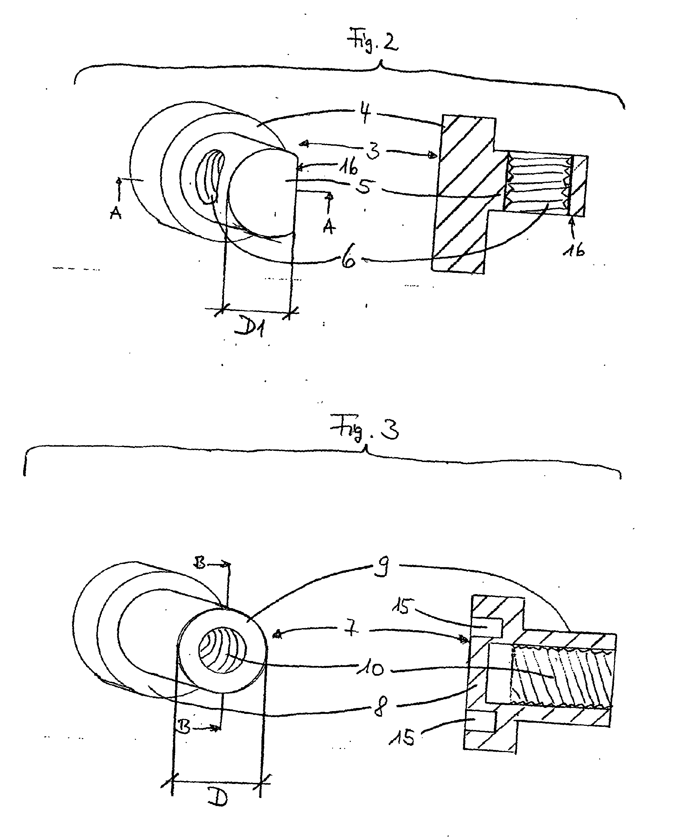

Figur 2a zeigt das erste Halteelement 3 in einer perspektivischen Darstellung sowie im Querschnitt A-A. Neben dem Haltekopf 4 ist auch der unterbrochen ausgeführte Schaft 5 und die quer zur Längsmittelachse angeordnete Gewindebohrung 6 erkennbar. Der Schaft 5 weist in Richtung der Gewindebohrung eine Dicke D1 auf, welche etwa 2/3 des maximal möglichen Durchmessers entspricht. Die Anlagefläche 16 bildet somit die Begrenzungsfläche des parallel zur Längsmittelachse abschnittenen Zylinders.

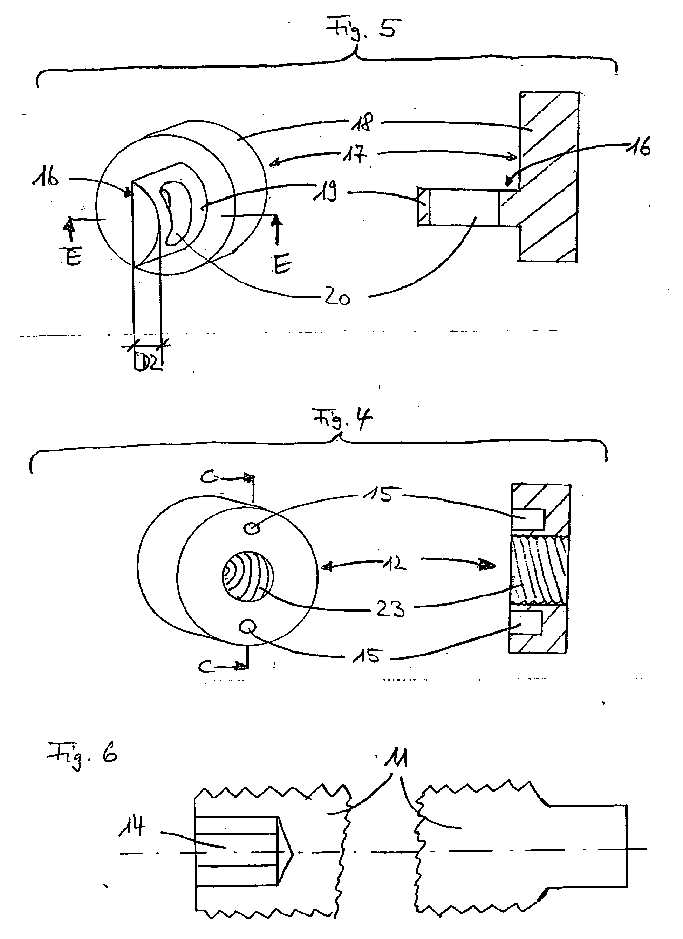

Das zweiten Halteelement 7 und dessen Strukturierung ist in Figur 3 dargestellt. In der perspektivischen Darstellung sind der Haltekopf 8, der Schaft 9 sowie die parallel zur Längsmittelsachse des Schaftes verlaufenden Gewindebohrung 10 erkennbar. Der Schaft 9 weist einen Durchmesser D2 auf. Die beiden Werkzeugsansätze 15 sind wiederum eindeutig in der QuerschnittsDarstellung nach Schnitt B-B des zweiten Halteelements 7 gezeigt.

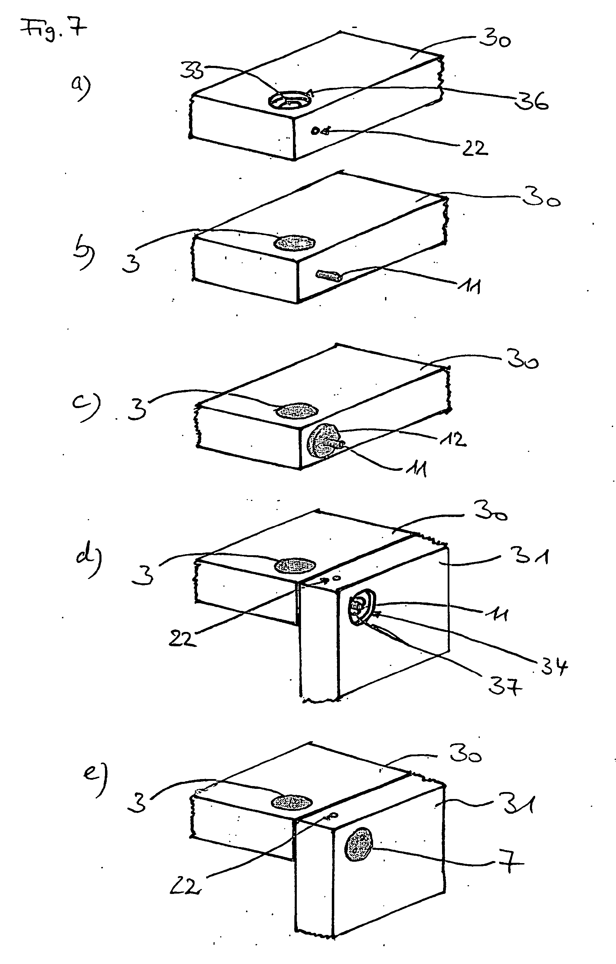

In analoger Weise ist in Figur 4 die Schraubenmutter 12 mit der Gewindebohrung 23 und den Werkzeugansätzen 15 gezeigt. Der Querschnitt folgt der Schnittlinie C-C in der perspektivischen Darstellung.

In der Figur 5 ist das Komplementärelement 17 dargestellt. Deutlich erkennbar ist wiederum die Asymmetrie des Schafts 19, welche in Zusammensicht mit Schaft 5 des ersten Halteelements gemäss Figur 2 die komplementäre Ausgestaltung verdeutlicht (vgl. Schnitt E-E). Der Schaft 19 des Komplementärelements 17 hat etwa nur eine Dicke von etwa 1/3 des maximal möglichen Durchmessers. Die Dicke D2 des komplementären Schafts 19 ergibt in Summation mit der Dicke D2 des Schafts 5 des ersten Halteelements 3 den Durchmesser D, wie dies beim Schaft 9 des zweites Halteelements der Fall ist. Die Bohrung 20, welche koaxial zur Gewindebohrung 6 des ersten Halteelements verläuft, weist kein Gewinde auf.

In Figur 6 sind in Detailansicht jeweils die Enden des Schraubenbolzens 11 gezeigt. Das eine Ende weist einen Werkzeugansatz 14 in Form eines Innensechskant auf. Das andere Ende des Schraubenbolzens 11 ist zylinderförmig, jedoch mit verringertem Durchmesser ausgebildet.

Gemäss einem Ausführungsbeispiel sind die Bestandteile des Verbindungselements 1 aus Stahl ausgeführt. Der Schraubenbolzen 11 (Fig. 2e) weist eine Länge von 45 mm und eine Ganghöhe von 4 mm auf. Die Masse der Halteelemente 3 und 7, der Schraubenmutter 12 und dem Komplementärelement 17 sind für die Verbindung von Holzplatten mit einer Stärke von 19 mm ausgelegt. Die Halteköpfe 4, 8 und 18 sowie die Schraubenmutter 12 sind zylindrisch ausgeführt und besitzen einen Durchmesser von 15 mm bei einer Stärke von 5 mm (Fig. 2a bis d). Die Werkzeugansätze 15, welche sowohl im zweiten Halteelement 7 hat als auch in der Schraubenmutter 12 vorhanden sind, weisen einen Durchmesser von 2 mm und einen Abstand von 9 mm zueinander auf. Sie sind symmetrisch zur Gewindebohrung 10 bzw. 23 angeordnet. Die Gewindebohrungen 10 und 23 besitzen identische Ganghöhen. Der Schaft 9 des zweiten Halteelementes 7 weist einen Durchmesser von 9 mm auf. Die Dicke des Schaftes 5 beträgt in Richtung der Gewindebohrung 6 6 mm. Der Schaft 19 hat eine Dicke in Richtung der Bohrung von 3 mm in Richtung der Bohrung 20. Aufgrund des identischen Durchmesser der Halteköpfe 4, 8 und 18, der Schraubenmutter 12 und ebenso der Schäfte 5, 9 und 19 können die Bestandteile des Verbindungselements im wesentlichen freizügig zur Herstellung einer Verbindung zweier Holzplatten eingesetzt werden.

Die Vorgehensweise beim Verbinden zweier Holzplatten ist in Figur 3 schematisch dargestellt. In die Holzplatten 30 und 31 werden entsprechend der beabsichtigten Verwendung die erforderlichen Senkbohrungen 36 und 37 inklusive der Durchgangsbohrung 33 und 34 eingearbeitet (Fig. 3a bzw. 3d). Das Halteelemente 3 sowie das Komplementärelement 17 (17 ist hier allerdings nicht sichtbar) werden in die Durchgangsbohrung 33 eingeführt und mit dem Schraubenbolzen 11 in dieser Bohrung fixiert (Fig. 3b). Der Schraubenbolzen 11 befindet sich hierbei in der Bohrung 22. Die Schraubenmutter 12 wird mittels eines nicht dargestellten Werkzeuges auf den Schraubenbolzen 11 geschraubt und fixiert gegenüber der Holzplatte 30 das erste Halteelement 3 und das Komplementärelement 17 (Fig. 3c). Nach dem Ansetzen der zweiten Holzplatte 31 gemäss Figur 3d wird das zweite Halteelement 7, ebenfalls mit dem nicht dargestellten Werkzeug aufgeschraubt und fest angezogen. Der Haltekopf 8 des zweiten Halteelements 7 liegt wie auch die Halteköpfe 4 und 18 plan in der jeweilige Ebene der Holzelemente.

Die beschriebenen Bestandteile der erfindungsgemässen Verbindungsvorrichtung sowie die plattenförmige Element sind nicht auf die gewählten Materialien und Masse beschränkt. Der Fachmann kann sich entsprechend dem Verwendungszweck bzw. optischen Aspekte verschiedene, ihm bekannte Materialzusammensetzungen vorstellen.

## Patentansprüche

1. Verbindungselement (1) zur Verbindung von vorzugsweise quer zueinander angeordneten, plattenförmigen Elementen (30, 31, 32) mit einem ersten Halteelement (3), einem zweiten Halteelement (7) und einem Schraubenbolzen (11), welcher mit den beiden Halteelementen (3, 7) verschraubbar ist, wobei die Halteelemente (3, 7) in korrespondierenden Ausnehmungen (13) in den plattenförmigen Elementen (30, 31, 32) einsetzbar und durch den Schraubenbolzen (11) verbindbar sind, **dadurch gekennzeichnet, dass**
das erste Halteelement (3) einen Haltekopf (4) und einen Schaft (5) aufweist, der eine quer zu seiner Längsmittelachse verlaufende Gewindebohrung (6) aufweist,
das zweite Halteelement (7) einen Haltekopf (8) und einen Schaft (9) aufweist, der eine in seiner Längsmittelachse verlaufende Gewindebohrung (10) aufweist, und dass
eine Schraubenmutter (12)vorgesehen ist, welche zwischen den beiden Halteelementen (3, 7) auf den Schraubenbolzen (11) aufschraubbar ist,
wobei das erste Halteelement (3) mittels der Schraubenmutter (12) in seiner Ausnehmung (13) verspannbar ist, bevor das zweite Halteelement (7) auf den Schraubenbolzen (11) aufschraubbar ist.

2. Verbindungselement (1) nach Anspruch 1, **dadurch gekennzeichnet, dass** der Schraubenbolzen (11) an einem Ende einen Werkzeugansatz (14) zum Ansetzen eines Schraubwerkzeuges aufweist.

3. Verbindungselement (1) nach Anspruch 1 oder 2, **dadurch gekennzeichnet, dass** der Haltekopf (8) des zweiten Halteelements (7) und/oder die Schraubenmutter (12) einen Werkzeugansatz (15) zum Ansetzen eines Schraubwerkzeuges aufweist bzw. aufweisen.

4. Verbindungselement (1) nach einem der Ansprüche 1 bis 3, **dadurch gekennzeichnet, dass** der Haltekopf (4) des ersten Halteelements (3) und/oder der Haltekopf (8) des zweiten Halteelements (7) als geschlossene, kreisförmige Scheibe mit zylindrischem Aussenmantel ausgebildet ist bzw. sind.

5. Verbindungselement (1) nach einem der Ansprüche 1 bis 4, **dadurch gekennzeichnet, dass** die Schraubenmutter (12) als kreisförmige Scheibe mit zylindrischem Aussenmantel ausgebildet ist.

6. Verbindungselement (1) nach einem der Ansprüche 1 bis 5, **dadurch gekennzeichnet, dass** der Schaft (5) des ersten Halteelements (3) wenigstens eine parallel zu seiner Längsmittelachse verlaufende Anlagefläche (16) aufweist und dass das erste Halteelement (3) mit einem Komplementärelement (17) versehen ist, das einen Kopf (18) und einen an der Anlagefläche (16) anliegenden Komplementärschaft (19) mit einer koaxial zur Gewindebohrung (6) im Schaft (5) des ersten Halteelementes (3) verlaufenden Durchgangsbohrung (20) aufweist.

7. Verbindungselement (1) nach Anspruch 6, **dadurch gekennzeichnet, dass** die Anlagefläche (16) als im Abstand zur Längsmittelachse verlaufende Ebene ausgebildet ist.

8. Verbindungselement (1) nach Anspruch 6 oder 7, **dadurch gekennzeichnet, dass** der Kopf (18) des Komplementärelements (17) gleich ausgebildet ist, wie der Haltekopf (4) des ersten Halteelements (3).

9. Bauteil (21), bestehend aus plattenförmigen Elementen (30, 31, 32), die mit mehreren in Senkbohrungen (23) eingesetzten Verbindungselementen (1) nach einem der Ansprüche 1 bis 7 miteinander verbunden sind.

10. Bauteil (21) nach Anspruch 9, **dadurch gekennzeichnet, dass** die Ausnehmungen (13) in den plattenförmigen Elementen (30, 31, 32) je eine Durchgangsbohrung (33, 34, 35) zur Aufnahme eines Schaftes (5, 9) sowie eine auf beiden Seiten des plattenförmigen Elements (30, 31, 32) angeordnete und koaxial zur Durchgangsbohrung (33, 34, 35) verlaufende Senkbohrung (36, 37, 38) zur Aufnahme eines Haltekopfes (4, 8, 18) bzw. einer Schraubenmutter (12) aufweisen.

## Claims

1. Connecting element (1) for connecting plate-shaped elements (30, 31, 32) preferably arranged transversely to one another, comprising a first holding element (3), a second holding element (7) and a screw bolt (11) which can be screwed to the two holding elements (3, 7), it being possible for the holding elements (3, 7) to be inserted into corresponding recesses (13) in the plate-shaped elements (30, 31, 32) and for them to be connected by the screw bolt (11),
**characterized in that**
the first holding element (3) has a holding head (4) and a shank (5) which has a tapped hole (6) running transversely to its longitudinal centre axis,
the second holding element (7) has a holding head (8) and a shank (9) which has a tapped hole (10) running in its longitudinal centre axis, and **in that**
a nut (12) is provided which can be screwed onto the screw bolt (11) between the two holding elements (3, 7),
it being possible for the first holding element (3) to be restrained in its recess (13) by means of the nut (12) before the second holding element (7) can be screwed onto the screw bolt (11).

2. Connecting element (1) according to Claim 1, **characterized in that** the screw bolt (11) has a tool application point (14) at one end for applying a screwdriving tool.

3. Connecting element (1) according to Claim 1 or 2, **characterized in that** the holding head (8) of the second holding element (7) and/or the nut (12) has or have a tool application point (15) for applying a screwdriving tool.

4. Connecting element (1) according to one of Claims 1 to 3, **characterized in that** the holding head (4) of the first holding element (3) and/or the holding head (8) of the second holding element (7) is or are designed as a closed, circular disc having a cylindrical outer lateral surface.

5. Connecting element (1) according to one of Claims 1 to 4, **characterized in that** the nut (12) is designed as a circular disc having a cylindrical outer lateral surface.

6. Connecting element (1) according to one of Claims 1 to 5, **characterized in that** the shank (5) of the first holding element (3) has at least one bearing surface (16) running parallel to its longitudinal centre axis, and **in that** the first holding element (3) is provided with a complementary element (17) which has a head (18) and a complementary shank (19) which bears against the bearing surface (16) and has a through-hole (20) running coaxially to the tapped hole (6) in the shank (5) of the first holding element (3).

7. Connecting element (1) according to Claim 6, **characterized in that** the bearing surface (16) is designed as a plane running at a distance from the longitudinal centre axis.

8. Connecting element (1) according to Claim 6 or 7, **characterized in that** the head (18) of the complementary element (17) is designed to be the same as the holding head (4) of the first holding element (3).

9. Component (21), consisting of plate-shaped elements (30, 31, 32) which are connected to one another by a plurality of connecting elements (1), inserted into counterbores (23), according to one of Claims 1 to 7.

10. Component (21) according to Claim 9, **characterized in that** the recesses (13) in the plate-shaped elements (30, 31, 32) each have a through-hole (33, 34, 35) for accommodating a shank (5, 9) and also a counterbore (36, 37, 38) which is arranged on both sides of the plate-shaped element (30, 31, 32), runs coaxially to the through-hole (33, 34, 35) and is intended for accommodating a holding head (4, 8, 18) or a nut (12).

## Revendications

1. Elément de connexion (1) destiné à connecter des éléments en forme de plaque disposés de préférence transversalement les uns par rapport aux autres (30, 31, 32), comprenant un premier élément de fixation (3), un deuxième élément de fixation (7) et un boulon fileté (11), qui peut être vissé avec les deux éléments de fixation (3, 7), les éléments de fixation (3, 7) pouvant être insérés dans des évidements correspondants (13) dans les éléments en forme de plaque (30, 31, 32) et pouvant être connectés par le boulon fileté (11), **caractérisé en ce que**
le premier élément de fixation (3) présente une tête de fixation (4) et une tige (5) qui présente un alésage fileté (6) s'étendant transversalement à son axe médian longitudinal,
le deuxième élément de fixation (7) présente une tête de fixation (8) et une tige (9) qui présente un alésage fileté (10) s'étendant dans son axe médian longitudinal, et **en ce qu'**il est prévu un écrou fileté (12) qui peut être vissé entre les deux éléments de fixation (3, 7) sur le boulon fileté (11),
le premier élément de fixation (3) pouvant être serré au moyen de l'écrou fileté (12) dans son évidement (13) avant que le deuxième élément de fixation (7) puisse être vissé sur le boulon fileté (11).

2. Elément de connexion (1) selon la revendication 1, **caractérisé en ce que** le boulon fileté (11) présente à une extrémité un insert d'outil (14) pour monter un outil de vissage.

3. Elément de connexion (1) selon la revendication 1 ou 2, **caractérisé en ce que** la tête de fixation (8) du deuxième élément de fixation (7) et/ou l'écrou fileté (12) présente(nt) un insert d'outil (15) pour le montage d'un outil de vissage.

4. Elément de connexion (1) selon l'une quelconque des revendications 1 à 3, **caractérisé en ce que** la tête de fixation (4) du premier élément de fixation (3) et/ou la tête de fixation (8) du deuxième élément de fixation (7) est réalisée ou sont réalisées sous forme de disque fermé circulaire avec une enveloppe extérieure cylindrique.

5. Elément de connexion (1) selon l'une quelconque des revendications 1 à 4, **caractérisé en ce que** l'écrou fileté (12) est réalisé sous forme d'un disque circulaire avec une enveloppe extérieure cylindrique.

6. Elément de connexion (1) selon l'une quelconque des revendications 1 à 5, **caractérisé en ce que** la tige (5) du premier élément de fixation (3) présente au moins une face d'appui (16) s'étendant parallèlement à son axe médian longitudinal et **en ce que** le premier élément de fixation (3) est pourvu d'un élément complémentaire (17) qui présente une tête (18) et une tige complémentaire (19) s'appliquant contre la face d'appui (16) avec un alésage traversant (20) s'étendant coaxialement à l'alésage fileté (6) dans la tige (5) du premier élément de fixation (3).

7. Elément de connexion (1) selon la revendication 6, **caractérisé en ce que** la face d'appui (16) est réalisée sous forme de plan s'étendant à distance de l'axe médian longitudinal.

8. Elément de connexion (1) selon la revendication 6 ou 7, **caractérisé en ce que** la tête (18) de l'élément complémentaire (17) est réalisée de manière identique à la tête de fixation (4) du premier élément de fixation (3).

9. Composant (21), constitué d'éléments en forme de plaque (30, 31, 32) qui sont connectés les uns aux autres avec plusieurs éléments de connexion (1) selon l'une quelconque des revendications 1 à 7 insérés dans des alésages borgnes (23).

10. Composant (21) selon la revendication 9, **caractérisé en ce que** les évidements (13) dans les éléments en forme de plaque (30, 31, 32) présentent chacun un alésage traversant (33, 34, 35) pour recevoir une tige (5, 9) ainsi qu'un alésage borgne (36, 37, 38) prévu des deux côtés de l'élément en forme de plaque (30, 31, 32) et s'étendant coaxialement à l'alésage traversant (33, 34, 35), pour recevoir une tête de fixation (4, 8, 18) ou un écrou fileté (12).
